# FASCICULE DE BREVET EUROPEEN

(11) **EP 2 805 649 B1**
(45) Date de publication et mention de la délivrance du brevet: **02.05.2018**
(21) Numéro de dépôt: 14167258.4
(22) Date de dépôt: 06.05.2014
(51) Int. Cl.: A47J 27/21

(54) **Bouilloire comportant un module de commande étanche**
Kochtopf, der ein dichtes Steuermodul umfasst
Boiler comprising a sealed control module

(30) Priorité: 21.05.2013 FR 1354548
(43) Date de publication de la demande: 26.11.2014
(73) Titulaire: SEB S.A., 69130 Ecully (FR)
(72) Inventeur: Cour, Angeline, 21000 Dijon (FR); Russier, Fabien, 21000 Dijon (FR); Payen, Christophe, 21380 Asnières Les Dijon (FR)
(74) Mandataire: Bourrières, Patrice

(56) Documents cités:
- EP-A2- 1 312 290
- CN-Y- 201 379 424
- GB-A- 2 108 809

## Description

La présente invention concerne une bouilloire et vise à améliorer l'étanchéité de la bouilloire afin de pouvoir la laver complètement après chaque utilisation sans nuire au bon fonctionnement de l'appareil lors d'un usage fréquent.

Diverses conceptions de bouilloires étanches sont connues de l'homme du métier, parmi lesquelles, par exemple, celle décrite dans la demande internationale de brevet publiée sous le numéro WO 2009/109762 A1. La bouilloire selon WO 2009/109762 A1 comprend un corps, une plaque chauffante, un boîtier inférieur dans lequel est logé un dispositif de commande interne, des moyens d'étanchéité étant mis en oeuvre entre le corps, la plaque chauffante et le boîtier inférieur. Cette bouilloire comporte un interrupteur de commande agencé de manière étanche sur le boitier inférieur. Cependant, un tel interrupteur de commande situé dans une partie basse de la bouilloire n'est pas très accessible pour l'utilisateur. De plus, l'interrupteur comporte un bouton manoeuvré par l'utilisateur par un appui horizontal. Ainsi, une telle bouilloire n'est pas ergonomique.

La demande de brevet chinois publiée sous le numéro CN 201213711 divulgue une bouilloire comportant une poignée sur laquelle est agencé un dispositif de commande externe. Cet agencement est plus ergonomique. Cependant, l'assemblage d'un tel dispositif de commande dans la poignée est long et compliqué. De plus, un tel dispositif de commande n'est pas étanche.

On connait également du document EP1312290 une bouilloire comportant un dispositif de commande externe muni d'un interrupteur sensible à la vapeur.

La présente invention vise à pallier ces inconvénients en mettant en oeuvre une bouilloire qui présente un dispositif de commande étanche fiable qui soit ergonomique et qui soit de conception simple et économique à mettre en oeuvre.

A cet effet, l'invention concerne une bouilloire selon la revendication 1, qui comprend un corps, une plaque chauffante et un boîtier inférieur dans lequel est logé un dispositif de commande interne de la plaque chauffante. Des moyens d'étanchéité sont mis en oeuvre entre le corps, la plaque et le boîtier inférieur. En outre, la bouilloire comprend un dispositif de commande externe relié au dispositif de commande interne et configuré pour actionner manuellement ledit dispositif de commande interne. Selon l'invention, le dispositif de commande externe forme un module autonome étanche. Par module autonome, on comprend que le dispositif de commande est assemblé pour former un sous ensemble qui sera ensuite rapporté sur la bouilloire. Ce module étanche peut être testé avant son montage sur la bouilloire. On obtient ainsi une bouilloire comportant un dispositif de commande de conception simple et économique à mettre en oeuvre. Un tel dispositif de commande est également très fiable.

Par un dispositif de commande externe relié au dispositif de commande interne, on comprend que dispositif de commande externe interagit avec le dispositif de commande interne par tous type de liaison, notamment un câble, une liaison magnétique ou une liaison sans fil par ondes électromagnétiques du type Bluetooth, infrarouge ou wifi.

La bouilloire selon l'invention assure également une étanchéité par l'extérieur, ce qui permet de laver et de rincer à l'eau l'extérieur de cette bouilloire, sans risque d'infiltration d'eau dans le dispositif de commande externe qui pourrait se propager le long du câble disposé à l'intérieur de la bouilloire et raccordé au dispositif de commande interne.

Selon une réalisation de la bouilloire objet de l'invention, le corps comprend une poignée. En outre, le dispositif de commande externe est agencé sur la poignée. Cette conception ergonomique facilite l'actionnement de la bouilloire.

Avantageusement, le dispositif de commande externe est raccordé par un câble au dispositif de commande interne.

Selon une mise en oeuvre de la bouilloire objet de l'invention, des moyens d'étanchéité sont agencés entre le câble et le boîtier inférieur. Cela renforce l'étanchéité de la bouilloire en empêchant tout risque d'une infiltration d'eau dans le boîtier inférieur du fait de la connexion par câble avec le dispositif de commande interne disposé dans le boîtier inférieur.

Avantageusement, le dispositif de commande externe est relié au dispositif de commande interne par une liaison magnétique ou une liaison sans fil par ondes électromagnétiques du type Bluetooth, infrarouge ou wifi.

Cette disposition permet d'obtenir un module autonome sans éléments physiques du type fils pour la liaison au dispositif de commande. Ainsi, l'étanchéité du module est facile à réaliser.

Selon une mise en oeuvre de la bouilloire, les moyens d'étanchéité sont formés par un presse-étoupe agencé sur le boîtier inférieur.

Selon une variante de mise en oeuvre de la bouilloire, les moyens d'étanchéité sont formés par un passage de paroi surmoulé sur le câble.

Avantageusement, des moyens d'étanchéité sont agencés entre le câble et le dispositif de commande externe.

Selon une conception préférentielle, le dispositif de commande externe comprend :
- un support inférieur, le câble passant au travers du support inférieur ;
- une carte circuit imprimé comprenant un interrupteur Marche/Arrêt, la carte circuit imprimé étant positionnée sur le support inférieur ;
- un joint élastomère configuré pour recouvrir la carte circuit imprimé et l'interrupteur Marche/Arrêt, en épousant leur forme et en laissant apparaître un contour périphérique plat qui repose sur le support inférieur;
- une pièce de serrage permettant de serrer en sandwich le contour du joint élastomère entre le support inférieur et la pièce de serrage ;
- un organe d'étanchéité agencé sur le support inférieur et configuré pour permettre le passage étanche du câble, ledit câble étant raccordé à la carte circuit imprimé.

Selon une mise en oeuvre de la bouilloire, l'organe d'étanchéité est un presse étoupe.

Selon une variante de mise en oeuvre de la bouilloire, l'organe d'étanchéité est une résine coulée entourant le câble.

Avantageusement dans cette variante de réalisation, le dispositif de commande externe comprend :
- un support inférieur, le câble passant au travers du support inférieur ;
- une carte circuit imprimé comprenant un interrupteur Marche/Arrêt ;
- un joint élastomère configuré pour recouvrir la carte circuit imprimé et l'interrupteur en épousant leur forme et en laissant apparaître un contour périphérique plat ;
- une pièce de serrage permettant de serrer en sandwich le contour du joint élastomère entre le support inférieur et la pièce de serrage ;
- la résine coulée recouvre une face arrière de la carte circuit imprimé, ladite face arrière étant bordée par le joint élastomère.

Un tel organe d'étanchéité formée par une résine coulée, initialement à l'état liquide pour sa mise en place puis qui durcit pour assurer une bonne liaison entre les pièces recouvertes, permet de passer la bouilloire sous l'eau sans risque de fuites, notamment autour du câble.

Selon une mise en oeuvre de la bouilloire, la poignée comporte une première partie 3a interne formant un évidement dans lequel est agencé le dispositif de commande externe. En outre, la poignée comporte une seconde partie d'habillage qui coiffe ledit dispositif de commande externe sur la poignée.

Selon cette réalisation de la bouilloire, le câble s'étend à l'intérieur de la poignée jusqu'au boîtier inférieur. Cela évite de prévoir un logement supplémentaire sur le corps de la bouilloire pour permettre le passage du câble jusqu'au boîtier inférieur.

Selon une conception de la bouilloire objet de l'invention, le boîtier inférieur comprend une paroi interne périphérique, de préférence de forme circulaire, qui s'étend vers le haut. Le corps comporte une partie inférieure. La plaque chauffante comprend une face inférieure et un rebord périphérique. Un joint d'étanchéité externe est agencé entre le rebord périphérique et la partie inférieure. Selon l'invention, un joint d'étanchéité interne est agencé entre la paroi interne et la face inférieure de la plaque chauffante pour empêcher toute pénétration d'eau dans le boitier, notamment de l'eau issue d'une fuite due à un défaut d'étanchéité du joint d'étanchéité externe.

Selon une conception de la bouilloire objet de l'invention, la partie inférieure du corps comprend une paroi externe périphérique configurée pour réceptionner au moins une partie supérieure de la paroi interne tout en conservant un espacement entre ces deux parois interne et externe, ledit espacement communiquant vers l'extérieur de la bouilloire.

Selon une conception de la bouilloire objet de l'invention, la plaque chauffante comprend un rebord périphérique muni d'un bord externe recourbé vers le bas et configuré pour être positionné entre la paroi interne et la paroi externe en maintenant un espacement, d'une part, entre la paroi interne et le bord externe et, d'autre part, entre le bord externe et la paroi externe. Le joint d'étanchéité interne est agencé entre la paroi interne et le bord externe et le joint d'étanchéité externe est agencé entre le bord externe et la paroi externe.

Ainsi, lorsque le corps de la bouilloire est rempli d'eau, le joint d'étanchéité externe évite que l'eau ne s'échappe entre la paroi externe du corps et le bord externe du rebord de la plaque chauffante. De même, le joint d'étanchéité interne permet d'éviter que l'eau ne pénètre entre la paroi interne du boîtier inférieur et le bord externe du rebord de la plaque chauffante, durant le nettoyage de la bouilloire avec de l'eau. En outre, lors d'un nettoyage fréquent, et de préférence à chaque utilisation, le joint d'étanchéité externe est plus sollicité que le joint d'étanchéité interne lors de l'essuyage de l'intérieur du corps de la bouilloire. Cela peut causer l'endommagement du joint d'étanchéité externe plus rapidement que le joint d'étanchéité interne. En cas de défectuosité du joint d'étanchéité externe, l'eau passe alors entre la paroi externe du corps et le bord externe du rebord de la plaque chauffante et s'évacue directement vers l'extérieur de la bouilloire. D'une part, cela évite le risque de pénétration d'eau dans le boîtier inférieur au cas où le joint d'étanchéité interne serait également défectueux ; d'autre part, cela permet de déceler une fuite éventuelle du joint d'étanchéité externe et de procéder à son remplacement.

Selon une conception de la bouilloire objet de l'invention, le rebord périphérique est muni également d'un bord interne recourbé vers le bas et configuré pour permettre le logement de la partie supérieure de la paroi interne entre le bord interne et le bord externe. En outre, le joint d'étanchéité interne est configuré pour assurer également une étanchéité entre le bord interne et la partie supérieure de la paroi interne. Cela renforce l'étanchéité entre la plaque chauffante et le boîtier inférieur, ainsi que le maintien de la plaque chauffante assemblée sur le boîtier inférieur.

Dans un mode de réalisation, selon cette conception de la bouilloire, le joint d'étanchéité interne comprend, dans un plan de vue en coupe sectionnelle :
- une branche interne qui s'étend vers le bas et est configurée pour être montée serrée autour du bord interne,
- une branche externe qui s'étend vers le bas et présente une face interne configurée pour être montée serrée autour de la partie supérieure de la paroi interne et une face externe configurée pour monter serré le bord externe autour de ladite face externe,
- une jonction entre la branche interne et la branche externe, une face inférieure de la jonction étant configurée pour prendre appui sur l'extrémité supérieure de la partie supérieure de la paroi interne et une face supérieure de la jonction étant configurée pour prendre appui sur le fond du rebord.

Dans une réalisation préférentielle du joint d'étanchéité interne, la face externe de la branche externe comprend au moins une lèvre. En outre, le bord externe du rebord comprend une face interne munie de stries. Cela renforce l'assemblage et l'étanchéité entre la plaque chauffante et le boîtier inférieur.

Selon une conception de la bouilloire objet de l'invention, le bord externe du rebord périphérique comprend à son extrémité inférieure un épaulement externe et la paroi externe comprend un épaulement interne. En outre, le joint d'étanchéité externe est positionné entre l'épaulement interne et l'épaulement externe. Cela permet de réaliser l'étanchéité entre le corps et la plaque chauffante en assurant un arrêt de la position du corps par rapport à la plaque chauffante.

Selon cette conception de la bouilloire, la paroi interne du boîtier inférieur comprend une partie inférieure, un épaulement externe périphérique étant agencé entre ladite partie inférieure et la partie supérieure de ladite paroi interne. En outre, l'épaulement interne de la paroi externe du corps et l'épaulement externe du bord externe sont configurés pour maintenir un espacement entre l'extrémité inférieure périphérique du corps et l'épaulement externe du boîtier inférieur lors de leur assemblage, ce qui permet l'évacuation de l'eau en cas de défectuosité du joint d'étanchéité externe.

Selon cette conception de la bouilloire, des moyens de fixation sont agencés entre l'extrémité inférieure de la paroi externe du corps et l'épaulement externe du boîtier inférieur. Cela permet de maintenir assemblés ensemble le corps, la plaque chauffante et le boîtier inférieur.

Selon la bouilloire objet de l'invention, celle-ci comprend une base d'alimentation électrique déportée munie d'un connecteur mâle. En outre, le boîtier inférieur comprend un fond muni d'un connecteur femelle configuré pour recevoir le connecteur mâle, ledit connecteur femelle étant configuré pour assurer une étanchéité du boîtier inférieur.

Selon une conception préférentielle, le connecteur mâle et le connecteur femelle sont circulaires. Cela assure une rotation à 360° du corps sur la base pour faciliter sa manipulation et permettre le positionnement ou le retrait du corps de la bouilloire dans n'importe qu'elle position par rapport à la base.

La description suivante met en évidence un mode préférentiel de réalisation de la bouilloire selon l'invention. Cette description s'appuie sur des figures parmi lesquelles :
- la figure 1 est une vue en coupe de la bouilloire montrant notamment le corps, la plaque chauffante, le boîtier inférieur et le dispositif de commande externe agencé sur une poignée ;
- la figure 2 est une vue en coupe partielle de la figure 1 montrant l'assemblage étanche entre le corps, la plaque chauffante et le boîtier intérieur ;
- la figure 3 est une vue éclatée de la bouilloire montrant les éléments du dispositif de commande externe intégrés dans la poignée ;
- la figure 4 est une vue partielle de la poignée de la bouilloire montrant l'assemblage des éléments du dispositif de commande externe illustrés en figure 3.
- la figure 5 est une vue éclatée d'une variante de réalisation du dispositif de commande externe de la bouilloire illustrée en figure 1.
- la figure 6 est une vue coupe du dispositif de commande externe illustré en figure 5.

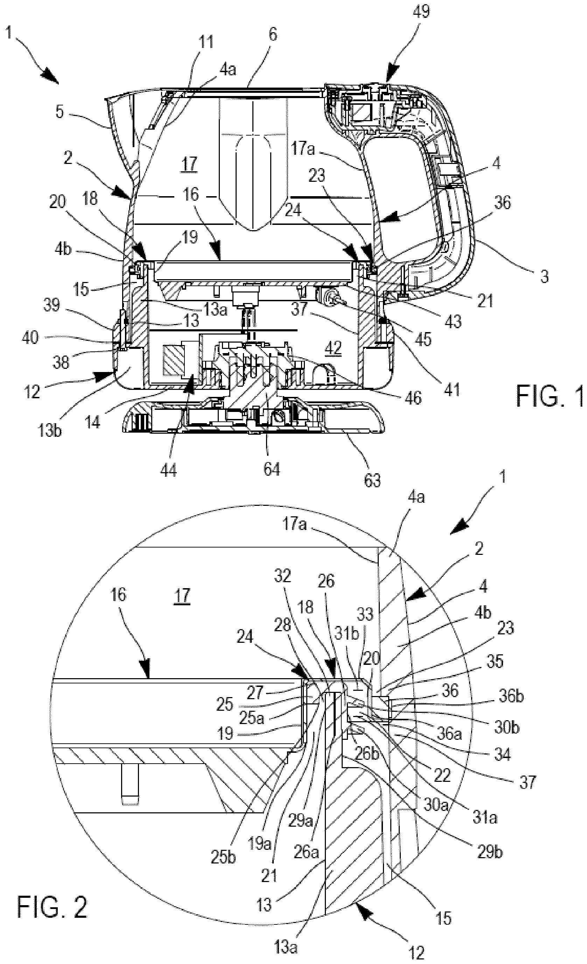

Tel qu'illustré sur les figures 1 à 3, la bouilloire 1 comprend un corps 2 qui est avantageusement en matière plastique. Un tel corps 2 en matière plastique assure une très faible conduction thermique afin d'éviter que l'utilisateur se brûle lorsqu'il manipule la bouilloire contenant de l'eau bouillante. Pour permettre la manipulation de la bouilloire 1, celle-ci comprend une poignée 3 fixée au corps 2. De préférence, le corps 2 et la poignée 3 sont réalisés en une seule pièce par moulage. Le corps 2 comprend une paroi externe 4 périphérique, de préférence de forme circulaire, qui s'étend vers le bas. La partie supérieure 4a de la paroi externe 4 comprend un bec verseur 5 permettant de verser l'eau bouillante lorsque le corps 2 est incliné. Cette partie supérieure 4a comprend une ouverture 6 qui reçoit un couvercle 7 de fermeture. Ce couvercle 7 comprend un système d'ouverture/fermeture 8 permettant l'encliquetage du couvercle sur la partie supérieure 4a du corps lors de sa mise en place au niveau de l'ouverture 6. Ce système d'ouverture/fermeture 8 comprend des ergots 9a, 9b escamotables lors de l'actionnement d'un bouton d'activation 10, ces ergots 9a, 9b venant se positionner sous le pourtour périphérique 11 de l'ouverture 6.

Tel qu'illustré sur les figures 1 et 2, la bouilloire 1 comprend un boîtier inférieur 12 également dans une matière plastique assurant une faible conduction thermique. Ce boîtier inférieur 12 comprend une paroi interne 13 périphérique et un fond 14. La paroi interne 13 s'étend vers le haut et présente une forme similaire à la paroi externe 4 du corps 2, en l'occurrence une forme circulaire. Le diamètre de la paroi interne 13 est inférieur à celui de la partie inférieure 4b de la paroi externe 4, ce qui permet l'introduction de la partie supérieure 13a paroi interne 13 à l'intérieur de la partie inférieure 4b de la paroi externe 4, en conservant un espacement 15 sur toute la périphérie entre lesdites parois interne 13 et externe 4.

Tel qu'illustré sur les figures 1 et 2, la bouilloire 1 comprend également une plaque chauffante 16 qui dispose d'une très bonne conduction thermique et constitue le fond d'une chambre 17 permettant de contenir de l'eau afin de la faire bouillir. Le contour 17a de cette chambre 17 est constitué par la partie supérieure 4a de la paroi externe 4 du corps 2. La plaque chauffante 16 comprend un rebord 18 périphérique de forme semblable aux parois internes 13 et externe 4, en l'occurrence de forme circulaire. Ce rebord 18 comprend un bord interne 19 et un bord externe 20, de forme circulaire, qui sont tous les deux recourbés vers le bas en s'étendant sur une longueur permettant de recevoir la partie supérieure 13a de la paroi interne 13, entre lesdits bords interne 19 et externe 20, comme illustré en détail sur la figure 2. Le diamètre du bord interne 19 est dimensionné pour maintenir un second espacement 21 entre ledit bord interne 19 et la partie supérieure 13a de la paroi interne 13, comme illustré en figure 2. En outre, le diamètre et l'épaisseur du bord externe 20 sont dimensionnés pour maintenir, d'une part, un troisième espacement 22 entre la partie supérieure 13a de la paroi interne 13 et le bord externe 20 et, d'autre part, un quatrième espacement 23 entre le bord externe 20 et la partie inférieure 4b de la paroi externe 4, tel qu'illustré en figure 2.

Tel qu'illustré en figures 1 et 2, un joint d'étanchéité interne 24 est agencé entre le rebord 18 de la plaque chauffante 16 et la partie supérieure 13a de la paroi interne 13. Ce joint d'étanchéité interne 24 a une forme annulaire et comprend une branche interne 25, une branche externe 26 et une jonction 27 entre les branches interne 25 et externe 26. Le diamètre de la face interne 25a de la branche interne 25 est dimensionné pour permettre son montage serré autour de la face externe 19a du bord interne 19 du rebord 18, comme illustré en figure 2. En outre l'épaisseur de la branche interne 25 permet de maintenir un cinquième espacement 28 entre la face externe 25b de la branche interne 25 et la face interne 29a de la partie supérieure 13a de la paroi interne 13.

Tel qu'illustré en figures 1 et 2, le diamètre de la face interne 26a de la branche externe 26 est dimensionné pour permettre un montage serré de la branche externe 26 sur la face externe 29b de la partie supérieure 13a de la paroi interne 13. La face externe 26b de la branche externe 26 comprend des lèvres 30a, 30b jointives qui assurent un montage serré sur la face interne 20a du bord externe 20 du rebord 18. Cette face interne 20a du bord externe 20 comprend des stries 31a, 31b

Tel qu'illustré en figure 2, la face inférieure 27a de la jonction 27 est en appui sur l'extrémité supérieure 32 de la partie supérieure 13a de la paroi interne 13. De même, la face supérieure 27b de la jonction est en appui sur le fond 33 du rebord 18.

Ainsi, la partie de la face inférieure de la plaque chauffante 16 située au niveau du rebord 18 est maintenue emboîtée et assemblée, de manière étanche, sur la partie supérieure 13a de la paroi interne 13 du boîtier inférieur 12.

Tel qu'illustré sur la figure 2, le bord externe 20 du rebord 18 comprend à son extrémité inférieure un épaulement externe 34 qui s'étend radialement à la périphérie de la plaque chauffante 16. En outre, la partie inférieure 4b de la paroi externe 4 du corps 2 comprend un épaulement interne 35 agencé de sorte qu'il soit disposé au-dessus de cet épaulement externe 34. Par ailleurs, un joint d'étanchéité externe 36 présente la forme d'un tore et présente une face interne 36a dont le diamètre assure un montage serré autour de la face externe 20b du bord externe 20, comme illustré en figure 2. De même, ce joint d'étanchéité 36 comprend une face externe 36b dont le diamètre assure un montage serré de la face interne 37 de la partie inférieure 4b de la paroi externe 4, située en dessous de l'épaulement interne 35, comme illustré en figure 2. On remarque sur cette figure 2 que ce joint d'étanchéité externe 36 permet d'assurer une butée indirecte entre l'épaulement externe 34 du bord externe 20 et l'épaulement interne 35 de la paroi 4, ce qui assure un arrêt en position du corps 2 par rapport à la plaque chauffante 16, et donc un arrêt en position du corps par rapport au boîtier inférieur 12.

Tel qu'illustré en figure 1, un épaulement externe 38 périphérique est agencé entre la partie supérieure 13a et une partie inférieure 13b de la paroi interne 13 du boîtier inférieur 12. La distance qui sépare cette épaulement externe 38 de l'extrémité supérieure 32 de la paroi interne 13 et, la distance qui sépare l'extrémité inférieure 39 de la paroi externe 4 du corps 2 et l'épaulement interne 35 sur ladite paroi externe 4, sont dimensionnées de sorte que lors de la mise en butée de cet épaulement interne 35 par rapport à l'épaulement externe 34 sur le rebord 18 de la plaque chauffante 16, par l'intermédiaire du joint d'étanchéité externe 36, un sixième espacement 40 soit préservé entre l'extrémité inférieure 39 du corps 2 et l'épaulement externe 38 du boîtier inférieur 12. Ce sixième espacement 40 est disposé dans la continuité du premier espacement 15 entre la paroi interne 13 et la paroi externe 4. Ainsi, en cas de défectuosité du joint d'étanchéité externe 36, l'eau s'évacue directement de la chambre 17 vers l'extérieur de la bouilloire 1 en passant par le premier espacement 15 puis par le sixième espacement 40.

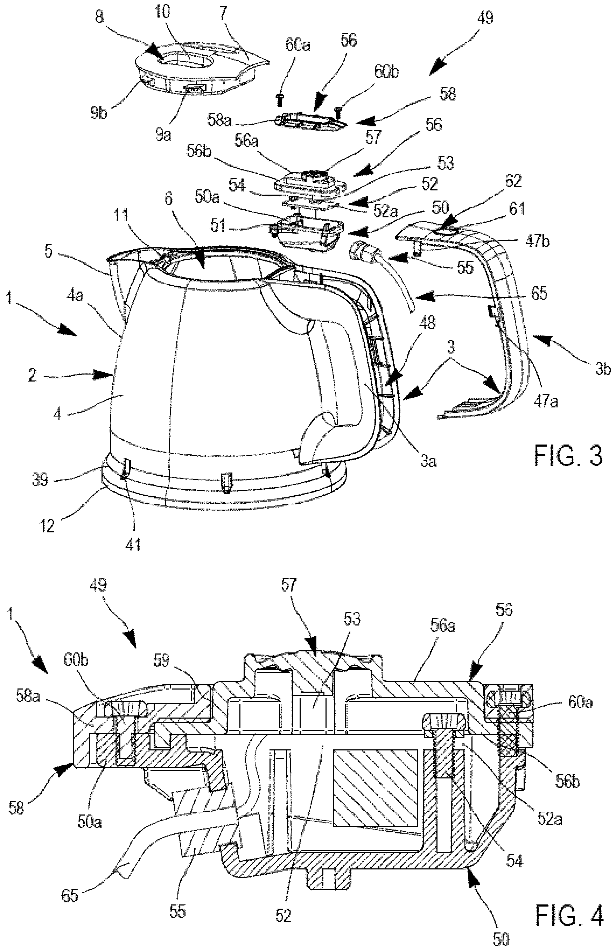

Tel qu'illustré en figures 1 et 3, l'extrémité inférieure 39 de la paroi externe 4 comprend des trous 41 uniformément répartis autour du corps 2, qui permettent le passage de vis de fixation (non illustrées). En outre la partie inférieure 13a de la paroi interne 13 comprend au niveau de l'épaulement externe 38 des taraudages (non illustrés) uniformément répartis autour du boîtier inférieur 12, en correspondance avec les trous 41. Ces taraudages permettent le vissage des vis de fixation pour le maintien assemblé du corps 2 sur le boîtier inférieur 12. Cette fixation assure également l'assemblage entre la plaque chauffante 16 et la partie supérieure 13a de la paroi interne 13 du boîtier inférieur 12 et entre la plaque chauffante 16 et la partie inférieure 4b de la paroi externe 4 du corps 2.

Tel qu'illustré en figure 1, lorsque le corps 2, le boîtier inférieur 12 et la plaque chauffante 16 sont assemblés entre eux, ledit boîtier inférieur 12 définit une chambre intérieure 42 qui permet notamment le logement d'une résistance chauffante 43 fixée sous la plaque chauffante 16, d'un dispositif électromécanique de commande interne 44 et d'un capteur de température 45. Le boîtier inférieur 12 comprend un connecteur électrique 46 femelle, agencé de manière étanche dans le fond 14 du boîtier inférieur 12. Ce connecteur électrique 46 est raccordé au dispositif électromécanique de commande interne 44 et permet sa connexion électrique à une base ou un socle 63 qui comprend un connecteur mâle 64 complémentaire au connecteur électrique 46 femelle. Cette base est configurée pour être raccordée électriquement à une source électrique externe par le biais d'une prise de courant. On remarque sur la figure 1 que le connecteur électrique 46 est circulaire, ce qui est également le cas du connecteur électrique sur la base. Cela permet une connexion du corps 2 sur la base d'alimentation électrique selon une quelconque orientation à 360°. Une telle base n'est pas illustrée mais est connue de l'homme du métier.

Tel qu'illustré en figures 3 et 4, la poignée 3 de la bouilloire 1 est constituée d'une première partie 3a intégrée complètement au corps 2, et d'une seconde partie 3b amovible. Pour cela, la seconde partie 3b comprend des pattes de fixation 47a, 47b qui s'encliquètent à l'intérieur de la première partie 3a de cette poignée 3. La première partie 3a de la poignée 3 comprend un évidement interne 48, illustré en figure 3, qui permet le logement et le passage d'un câble 65 (illustré aux figures 3 et 4) pour son raccordement au boîtier inférieur 12. Pour cela, la paroi interne 13 comprend un trou de passage (non illustré) du câble 65 et un presse-étoupe est monté au niveau dudit trou de passage pour permettre l'introduction du câble 65 de manière étanche à l'intérieur de la chambre intérieure 42.

Tel qu'illustré en figures 3 et 4, un dispositif de commande externe 49 est agencé en partie supérieure de la poignée 3 et permet l'activation du dispositif électromécanique de commande interne 44. Ce dispositif de commande externe 49 comprend un support inférieur 50 qui est logé dans l'évidement interne 48 de la première partie 3a de la poignée 3 et fixé à l'intérieur de cet évidement 48 au moyen de vis de fixation 5 illustrées en figure 3. Le dispositif de commande externe 49 comprend également une carte circuit imprimé 52 qui intègre un interrupteur 53 marche/arrêt de type switch ON/OFF. Cette carte circuit imprimé 52 est fixée sur la face supérieure 50a du support inférieur 50 au moyen de vis de fixation 54, comme illustré en figure 4. L'extrémité supérieure du câble 65 passe au travers du support inférieur 50 et est raccordé à la carte circuit imprimé 52. Pour cela un trou de passage est prévu sur le support inférieur 50 et reçoit un presse-étoupe 55, illustré en figure 3, qui assure un passage étanche du câble 65 au travers du support inférieur 50. Tel qu'illustré en figures 3 et 4, le dispositif de commande externe 49 comprend un joint d'étanchéité 56 en matière élastomère qui comprend une partie centrale 56a muni d'un bouton souple 57, cette partie centrale 56a étant configurée pour recouvrir les composants sur la carte circuit imprimé 52 et l'interrupteur 53 en épousant leur forme. La souplesse du bouton souple 57 permet sa déformation lorsque l'utilisateur exerce une pression dessus et ainsi, l'activation de l'interrupteur 53. Le joint d'étanchéité 56 comprend également un contour périphérique 56b qui est plat et qui repose sur le contour 52a de la carte circuit imprimé 52. Le dispositif de commande externe 49 comprend également une pièce de serrage 58 qui comprend en sa partie centrale une ouverture 59 qui est configurée pour permettre le passage de la portion centrale 56a du joint d'étanchéité 56. Cette pièce de serrage 58 comprend un contour 58a périphérique et plat qui prend appui au-dessus du contour 56b du joint 56 et permet de serrer en sandwich ledit contour 56b du joint 56 élastomère entre le contour 52a de la carte circuit imprimé 52 et le contour 58a de la pièce de serrage 58. Le contour 52a de la carte circuit imprimé 52 repose sur la face supérieure 50a de la pièce de support 50, ce qui implique que le contour 56b du joint 56 est en appui indirectement sur ladite face supérieure 50a. On pourrait cependant prévoir un appui direct du contour 56b du joint 56, auquel cas le joint serait pris en sandwich entre la pièce de support 50 et la pièce de serrage 58. La pièce de serrage 58 est fixée directement sur la pièce de support 50 au moyen de vis de fixation 60a, 60b. Tel qu'illustré en figure 4, la seconde partie 3b de la poignée 3 comprend une ouverture 61 qui permet le passage du bouton souple 57 et de l'interrupteur 53 lors de son assemblage avec la première partie 3a de la poignée. Le contour 62 de cette ouverture est en appui sur la partie centrale 56a du joint 56, autour du bouton souple 57, ce qui assure également une étanchéité entre le dispositif de commande externe 49 et la poignée 3.

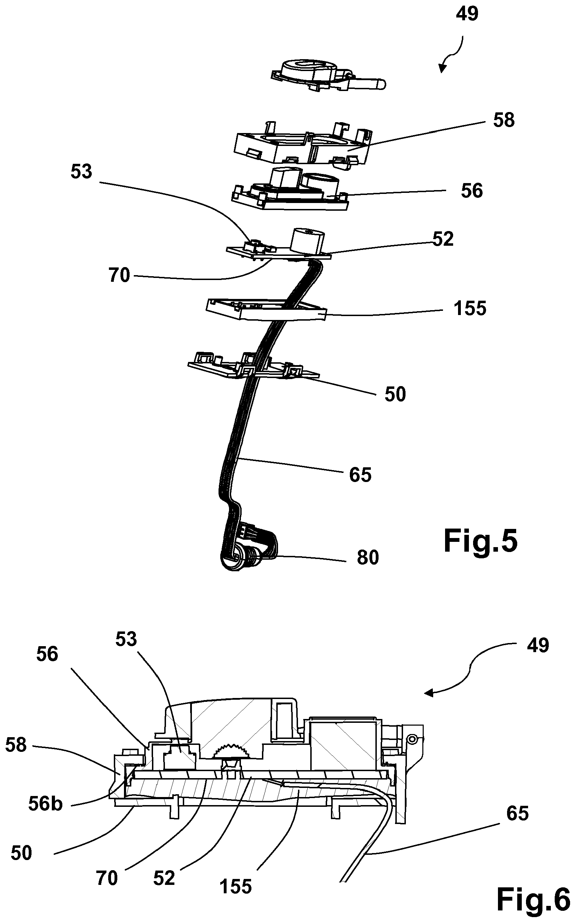

Dans une variante de réalisation du dispositif de commande externe 49 illustrée aux figures 5 et 6, la carte circuit imprimée 52 est coiffée par le joint d'étanchéité 56. La carte circuit imprimé 52 et le joint d'étanchéité sont agencés entre la pièce de blocage 58 et la pièce support 50. La pièce de blocage 58 et la pièce support 50 sont assemblées par clipage. La carte circuit imprimée 52 comporte une face arrière 70 qui est bordée par le joint d'étanchéité. Une résine 155 est coulée par gravité dans une cavité formée par la face arrière 70, le joint d'étanchéité 56 et la pièce de blocage 58. La résine 155 entoure le câble 65 et recouvre la face arrière 70, le joint d'étanchéité 56 et une bordure périphérique de la pièce de blocage.

La résine 155 est initialement à l'état liquide pour pouvoir être coulée dans la cavité puis durcit pour réaliser une liaison étanche entre les pièces recouvertes, notamment l'étanchéité du passage du câble 65. La résine 155 coulée sera de préférence une résine polyuréthane.

D'autres caractéristiques sont envisageables dans le cadre de l'invention. On peut notamment prévoir un voyant lumineux sur la carte circuit imprimé et un joint 56 d'étanchéité dans un élastomère transparent, pour indiquer l'allumage de la bouilloire 1. On peut également prévoir des variantes de forme pour le joint d'étanchéité interne 24 et pour le joint d'étanchéité externe 36.

## Revendications

1. Bouilloire (1) comprenant un corps (2), une plaque chauffante (16), un boîtier inférieur (12) dans lequel est logé un dispositif de commande interne (44) et un dispositif de commande externe (49) relié au dispositif de commande interne (44) et configuré pour actionner manuellement ledit dispositif de commande interne (44), le corps (2) comprenant une poignée (3), le dispositif de commande externe (49) étant agencé sur la poignée, le dispositif de commande externe (49) formant un module autonome étanche pour permettre de laver et de rincer à l'eau l'extérieur de ladite bouilloire, le dispositif de commande externe (49) étant raccordé par un câble (65) au dispositif de commande interne (44), **caractérisé en ce que** des moyens d'étanchéité (55, 155) sont agencés entre le câble (65,) et le dispositif de commande externe (49).

2. Bouilloire selon la revendication 1, **caractérisée en ce que** des moyens d'étanchéité sont agencés entre le câble (65) et ledit boîtier inférieur (12).

3. Bouilloire (1) selon la revendication 2, **caractérisée en ce que** les moyens d'étanchéité sont formés par un presse-étoupe agencé sur le boîtier inférieur.

4. Bouilloire (1) selon la revendication 2, **caractérisée en ce que** les moyens d'étanchéité sont formés par un passage de paroi (80) surmoulé sur le câble.

5. Bouilloire (1) selon la revendication 1, **caractérisée en ce que** le dispositif de commande externe (49) est relié au dispositif de commande interne (44) par une liaison magnétique ou une liaison sans fil par ondes électromagnétiques du type Bluetooth, infrarouge ou wifi.

6. Bouilloire (1) selon la revendication 1, **caractérisée en ce que** le dispositif de commande externe (49) comprend :
- un support inférieur (50), le câble (65) passant au travers du support inférieur ;
- une carte circuit imprimé (52) comprenant un interrupteur (53) Marche/Arrêt ;
- un joint élastomère (56) configuré pour recouvrir la carte circuit imprimé et l'interrupteur en épousant leur forme et en laissant apparaître un contour (56b) périphérique plat ;
- une pièce de serrage (58) permettant de serrer en sandwich le contour du joint élastomère entre le support inférieur et la pièce de serrage ;
- l'organe d'étanchéité (55) est agencé sur le support inférieur et configuré pour permettre le passage étanche du câble (65), ledit câble (65) étant raccordé à la carte circuit imprimé.

7. Bouilloire (1) selon la revendication 6, **caractérisée en ce que** l'organe d'étanchéité est un presse étoupe (55).

8. Bouilloire (1) selon la revendication 6, **caractérisée en ce que** l'organe d'étanchéité est une résine (155) coulée entourant le câble (65).

9. Bouilloire (1) selon la revendication 8, **caractérisée en ce que** le dispositif de commande externe (49) comprend :
- un support inférieur (50), le câble (65) passant au travers du support inférieur ;
- une carte circuit imprimé (52) comprenant un interrupteur (53) Marche/Arrêt ;
- un joint élastomère (56) configuré pour recouvrir la carte circuit imprimé et l'interrupteur en épousant leur forme et en laissant apparaître un contour (56b) périphérique plat ;
- une pièce de serrage (58) permettant de serrer en sandwich le contour du joint élastomère entre le support inférieur et la pièce de serrage ;
- la résine (155) coulée recouvre une face arrière (70) de la carte circuit imprimé et une extrémité du câble (65), ladite face arrière (70) étant bordée par le joint élastomère (56).

10. Bouilloire (1) selon la revendication 1, **caractérisée en ce que** la poignée comporte une première partie (3a) interne formant un évidement (48) dans lequel est agencé le dispositif de commande externe (49) et **en ce que** la poignée (3) comporte une seconde partie (3b) d'habillage qui coiffe le dispositif de commande externe (49).

11. Bouilloire (1) selon l'une des revendications 1 à 10, **caractérisée en ce que** :
- le boîtier inférieur (12) comprend une paroi interne (13) périphérique qui s'étend vers le haut ;
- le corps (2) comporte une partie inférieure (4b) ;
- la plaque chauffante comprend une face inférieure (19a, 20a, 33) et un rebord périphérique (18) ;
- un joint d'étanchéité externe (36) est agencé entre le rebord périphérique (18) et la partie inférieure (4b), et ;
- un joint d'étanchéité interne (24) est agencé entre la paroi interne (13) et la face inférieure (19a, 20a, 33) de plaque chauffante (2) pour empêcher toute pénétration d'eau dans le boitier, notamment de l'eau issue d'une fuite due à un défaut d'étanchéité du joint d'étanchéité externe (36).

12. Bouilloire (1) selon l'une des revendications 1 à 11, **caractérisée en ce qu'**elle comprend une base (63) d'alimentation électrique déportée, munie d'un connecteur mâle (64), le boîtier inférieur (12) comprenant un fond (14) muni d'un connecteur femelle (46) configuré pour recevoir le connecteur mâle, ledit connecteur femelle étant configuré pour assurer une étanchéité du boîtier inférieur.

## Patentansprüche

1. Wasserkocher (1), umfassend einen Körper (2), eine Heizplatte (16), ein unteres Gehäuse (12), in dem eine interne Steuervorrichtung (44) und eine externe Steuervorrichtung (49) aufgenommen sind, die mit der internen Steuervorrichtung (44) verbunden ist, und konfiguriert ist, um manuelle die interne Steuervorrichtung (44) zu betätigen, wobei der Körper (2) einen Griff (3) umfasst, wobei die externe Steuervorrichtung (49) auf dem Griff angeordnet ist, wobei die externe Steuervorrichtung (49) ein abgedichtetes, autonomes Modul bildet, um es zu ermöglichen, das Äußere des Wasserkochers mit Wasser zu waschen und abzuspülen, wobei die externe Steuervorrichtung (49) über ein Kabel (65) an der internen Steuervorrichtung (44) angeschlossen ist, **dadurch gekennzeichnet, dass** die Dichtungsmittel (55, 155) zwischen dem Kabel (65) und der externen Steuervorrichtung (49) angeordnet sind.

2. Wasserkocher nach Anspruch 1, **dadurch gekennzeichnet, dass** die Dichtungsmittel zwischen dem Kabel (65) und dem unteren Gehäuse (12) angeordnet sind.

3. Wasserkocher (1) nach Anspruch 2, **dadurch gekennzeichnet, dass** die Dichtungsmittel durch eine Stopfbuchse gebildet sind, die auf dem unteren Gehäuse angeordnet ist.

4. Wasserkocher (1) nach Anspruch 2, **dadurch gekennzeichnet, dass** die Dichtungsmittel durch einen Wanddurchgang (80) gebildet sind, der auf das Kabel umspritzt ist.

5. Wasserkocher (1) nach Anspruch 1, **dadurch gekennzeichnet, dass** die externe Steuervorrichtung (49) mit der internen Steuervorrichtung (44) durch eine magnetische Verbindung oder eine drahtlose Verbindung durch elektromagnetische Wellen vom Typ Bluetooth, Infrarot oder WLAN verbunden ist.

6. Wasserkocher (1) nach Anspruch 1, **dadurch gekennzeichnet, dass** die externe Steuervorrichtung (49) umfasst:
- einen unteren Träger (50), wobei das Kabel (65) durch den unteren Träger verläuft;
- eine Leiterplatte (52), die einen EIN / AUS-Schalter (53) umfasst;
- eine elastomere Dichtung (56), die konfiguriert ist, um die Leiterplatte und den Schalter abzudecken, wobei sie sich an ihre Form anpasst und eine flache Umfangskontur (56b) zum Vorschein kommen lässt;
- ein Klemmstück (58), das es ermöglicht, die Kontur der elastomeren Dichtung zwischen dem unteren Träger und dem Klemmstück sandwichartig einzuklemmen;
- die Dichtungseinrichtung (55), die auf dem unteren Träger angeordnet ist und konfiguriert ist, um den abgedichteten Durchgang des Kabels (65) zu ermöglichen, wobei das Kabel (65) an der Leiterplatte angeschlossen ist.

7. Wasserkocher (1) nach Anspruch 6, **dadurch gekennzeichnet, dass** die Dichtungseinrichtung eine Stopfbuchse (55) ist.

8. Wasserkocher (1) nach Anspruch 6, **dadurch gekennzeichnet, dass** die Dichtungseinrichtung ein gegossenes Harz (155) ist, das das Kabel (65) umgibt.

9. Wasserkocher (1) nach Anspruch 8, **dadurch gekennzeichnet, dass** die externe Steuervorrichtung (49) umfasst:
- einen unteren Träger (50), wobei das Kabel (65) durch den unteren Träger verläuft;
- eine Leiterplatte (52), die einen EIN / AUS-Schalter (53) umfasst;
- eine elastomere Dichtung (56), die konfiguriert ist, um die Leiterplatte und den Schalter abzudecken, wobei sie sich an ihre Form anpasst und eine flache Umfangskontur (56b) zum Vorschein kommen lässt;
- ein Klemmstück (58), das es ermöglicht, die Kontur der elastomeren Dichtung zwischen dem unteren Träger und dem Klemmstück sandwichartig einzuklemmen;
- das gegossene Harz (155), das eine hintere Fläche (70) der Leiterplatte und ein Ende des Kabels (65) abdeckt, wobei die hintere Fläche (70) von der elastomeren Dichtung (56) umrandet ist.

10. Wasserkocher (1) nach Anspruch 1, **dadurch gekennzeichnet, dass** der Griff einen ersten inneren Abschnitt (3a) aufweist, der eine Aussparung (48) bildet, in der die externe Steuervorrichtung (49) angeordnet ist, und dass der Griff (3) einen zweiten Verkleidungsabschnitt (3b) aufweist, der die externe Steuervorrichtung (49) abdeckt.

11. Wasserkocher (1) nach einem der Ansprüche 1 bis 10, **dadurch gekennzeichnet, dass**:
- das untere Gehäuse (12) eine innere Umfangswand (13) umfasst, die sich nach oben erstreckt;
- der Körper (2) einen unteren Abschnitt (4b) aufweist;
- die Heizplatte eine untere Fläche (19a, 20a, 33) und einen Umfangsrand (18) umfasst;
- eine äußere Dichtung (36) zwischen dem Umfangsrand (18) und dem unteren Abschnitt (4b) angeordnet ist; und
- eine innere Dichtung (24) zwischen der inneren Wand (13) und der unteren Fläche (19a, 20a, 33) der Heizplatte (2) angeordnet ist, um jegliches Eindringen von Wasser in das Gehäuse, insbesondere von Wasser, das von einer Leckage aufgrund eines Dichtungsversagens der externen Dichtung (36) stammt, zu verhindern.

12. Wasserkocher (1) nach einem der Ansprüche 1 bis 11, **dadurch gekennzeichnet, dass** er eine entfernte Basis (63) zur Stromversorgung umfasst, die mit einem Stecker (64) versehen ist, wobei das untere Gehäuse (12) einen Boden (14) umfasst, der mit einer Buchse (46) versehen ist, die konfiguriert ist, um den Stecker aufzunehmen, wobei die Buchse konfiguriert ist, um die Dichtigkeit des unteren Gehäuses sicherzustellen.

## Claims

1. Kettle (1) comprising a body (2), a heating plate (16), a lower casing (12) wherein are housed an inner control device (44) and an outer control device (49) connected to the inner control device (44), and configured to manually actuate said inner control device (44), the body (2) comprising a handle (3), the outer control device (49) being arranged on the handle, the outer control device (49) forming an autonomous sealed module to enable the outside of said kettle to be washed and rinsed with water, the outer control device (49) being connected by a cable (65) to the inner control device (44), **characterised in that** the sealing means (55, 155) are arranged between the cable (65) and the outer control device (49).

2. Kettle according to claim 1, **characterised in that** the sealing means are arranged between the cable (65) and said lower casing (12).

3. Kettle (1) according to claim 2, **characterised in that** the sealing means are formed by a cable gland arranged on the lower casing.

4. Kettle (1) according to claim 2, **characterised in that** the sealing means are formed by a wall passage (80) overmoulded on the cable.

5. Kettle (1) according to claim 1, **characterised in that** the outer control device (49) is connected to the inner control device (44) by a magnetic connection or a wireless Bluetooth, infrared or wi-fi electromagnetic wave connection.

6. Kettle (1) according to claim 1, **characterised in that** the outer control device (49) comprises:
- a lower support (50), the cable (65) passing through the lower support;
- a printed circuit board (52) comprising an On/Off switch (53);
- an elastomer seal (56) configured to cover the printed circuit board and the switch by moulding their form and by letting a flat peripheral edge (56b) appear;
- a tightening part (58) enabling to sandwich the elastomer seal edge between the lower support and the tightening part;
- the sealing member (55) is arranged on the lower support and configured to enable the sealed passage of the cable (65), said cable (65) being connected to the printed circuit board.

7. Kettle (1) according to claim 6, **characterised in that** the sealing member is a cable gland (55).

8. Kettle (1) according to claim 6, **characterised in that** the sealing member is a moulded resin (155) surrounding the cable (65).

9. Kettle (1) according to claim 8, **characterised in that** the outer control device (49) comprises:
- a lower support (50), the cable (65) passing through the lower support;
- a printed circuit board (52) comprising an On/Off switch (53);
- an elastomer seal (56) configured to cover the printed circuit board and the switch by moulding their form and by letting a flat peripheral edge (56b) appear;
- a tightening part (58) enabling to sandwich the elastomer seal edge between the lower support and the tightening part;
- the moulded resin (155) covers a rear face (70) of the printed circuit board and an end of the cable (65), said rear face (70) being bordered by the elastomer seal (56).

10. Kettle (1) according to claim 1, **characterised in that** the handle comprises a first inner part (3a) forming a recess (48) wherein is arranged the outer control device (49) and **in that** the handle (3) comprises a second covering part (3b) which covers the outer control device (49).

11. Kettle (1) according to one of claims 1 to 10, **characterised in that**:
- the lower casing (12) comprises an inner peripheral wall (13) which extends towards the top;
- the body (2) comprises a lower part (4b);
- the heating plate comprises a lower face (19a, 20a, 33) and a peripheral edge (18);
- an outer seal (36) is arranged between the peripheral edge (18) and the lower part (4b), and;
- an inner seal (24) is arranged between the inner wall (13) and the lower face (19a, 20a, 33) of the heating plate (2) to prevent any water entering the casing, in particular, water from a leak due to the sealing of the outer seal (36) failing.

12. Kettle (1) according to one of claims 1 to 11, **characterised in that** it comprises a remote power supply base (63), equipped with a male connector (64), the lower casing (12) comprising a base (14) equipped with a female connector (46) configured to receive the male connector, said female connector being configured to ensure that the lower casing is sealed.
